(19) Europäisches Patentamt

European Patent Office

Office européen des brevets

(11) Veröffentlichungsnummer : **0 349 827 B1**

(12) # EUROPÄISCHE PATENTSCHRIFT

(45) Veröffentlichungstag der Patentschrift :
**27.05.92 Patentblatt 92/22**

(51) Int. Cl.⁵ : **C08F 8/44,** C08F 210/02,
// (C08F210/02, 220:04)

(21) Anmeldenummer : **89111193.2**

(22) Anmeldetag : **20.06.89**

(30) Priorität : **30.06.88 DE 3822068**

(43) Veröffentlichungstag der Anmeldung :
**10.01.90 Patentblatt 90/02**

(45) Bekanntmachung des Hinweises auf die
Patenterteilung :
**27.05.92 Patentblatt 92/22**

(84) Benannte Vertragsstaaten :
**AT BE DE ES FR GB NL**

(56) Entgegenhaltungen :
**EP-A- 0 193 110**
**EP-A- 0 223 182**
**DE-A- 1 745 938**
**FR-A- 1 476 033**

(54) **Verfahren zur ionischen Vernetzung eines Ethylencopolymerisats.**

(73) Patentinhaber : **BASF Aktiengesellschaft**
**Carl-Bosch-Strasse 38**
**W-6700 Ludwigshafen (DE)**

(72) Erfinder : **Muehlenbernd, Thomas, Dr.**
**Siegelsmauer 3a**
**W-6900 Heidelberg (DE)**
Erfinder : **Hasenbein, Norbert, Dr.**
**Neuoettinger Strasse 4**
**W-6716 Dirmstein (DE)**
Erfinder : **Koehler, Gernot, Dr.**
**Calvinstrasse 7c**
**W-6520 Worms 1 (DE)**
Erfinder : **Schlemmer, Lothar**
**Duisbergstrasse 1a**
**W-6701 Maxdorf (DE)**

**Beschreibung**

Die Erfindung betrifft ein Verfahren zur Herstellung von ionisch vernetzten Ethylencopolymerisaten durch Mischen von Ethylencopolymerisaten, die 0,1 bis 20 Mol% $\alpha$, $\beta$-ethylenisch ungesättigte Carbonsäuren oder $\alpha$, $\beta$-ethylenisch ungesättigte Carboxylgruppen liefernde Comonomere einpolymerisiert enthalten, mit einem wasserlöslichen Metallsalz oder Metallhydroxid bei Temperaturen oberhalb des Schmelzpunktes des Ethylencopolymerisats in einem Zweiwellenextruder.

Bei derartigen Verfahren werden thermoplastische Ethylencopolymerisate mit carboxylgruppenhaltigen Monomeren, von denen ein Teil als freie Carboxylgruppen vorliegt, der Rest mit Metallkationen gebunden ist, erhalten, so daß eine gewisse Quervernetzung erreicht wird.

Verfahren zum Modifizieren von Carboxylgruppen-enthaltenden Ethylencopolymeren sind beispielsweise in den US-Patenten 32 64 272 und 39 89 434 und im britischen Patent 1 475 336 beschrieben. Die Herstellung erfolgt hierbei einmal auf Kautschukmahlwerken, Zweiwalzenmahlwerken und Plastifizierungsextrudern mit einem Längen/Durchmesserverhältnis von 21 oder auf einem Einwellenextruder wie er beispielsweise im US-Patent 3 006 029 beschrieben ist.

Die Verfahren weisen jedoch den Nachteil auf, daß die Homogenität der erhaltenen ionisch vernetzten Ethylencopolymerisate zu wünschen übrig läßt.

Ein elegantes Verfahren zur Herstellung von ionisch vernetzten Ethylencopolymerisaten mit verbesserter Produkthomogenität in einem Zweiwellenextruder ist in der EP-A- 01 93 110 beschrieben. Es sind jedoch spezielle korrosionsgeschützte Stähle, wie z.B. mit den Werkstoffbezeichnungen 14122, 12460, 14540 oder 14405 erforderlich. Diese teuren Spezialstähle setzen die Wirtschaftlichkeit des Verfahrens herab und schränken die Verfahrensflexibilität ein. Ein gewöhnlicher, preiswerter CPR-Stahl der Firma Dörrenberg Edelstahl, Engelskirchen (1,2C/12Cr/2,5W/1,4170/1,7V) führt beim Einsatz von wäßrigen Metallsalzlösungen gemäß EP-A- 01 93 110 zu starker Korrosion.

Keinerlei Korrosion erhält man, wenn man die Ethylencopolymerisate mit festen Metallsalzen mischt. Die Umsetzung der Ethylencopolymerisate zu den Ionomeren ist jedoch nicht vollständig. In Folien sind Stippen aus nicht umgesetzten Metallsalzen zu erkennen.

Daher bestand die Aufgabe, ein Verfahren zu finden, bei dem ein Ionomer mit verbesserter Produkthomogenität bei gleichzeitig minimaler Korrosionsschutzausrüstung des Reaktionsextruders erhalten wird.

Diese Aufgaben wurden gemäß den Patentansprüchen 1 und 2 gelöst.

Als Ethylencopolymerisate kommen Copolymerisate des Ethylens, die 0,1-20 Mol%, vorzugsweise 0,5-10 Mol%, bezogen auf das Copolymerisat, $\alpha$,$\beta$-ethylenisch ungesättigte Carbonsäuren oder $\alpha$,$\beta$-ethylenisch ungesättigte Carboxylgruppen liefernde Comonomere einpolymerisiert enthalten, in Frage. Unter $\alpha$,$\beta$-ungesättigten Carbonsäuren werden dabei die üblichen mit Ethylen copolymerisierbaren Carbonsäuren wie Acrylsäure, Methacrylsäure, Itakonsäure, Maleinsäure oder Fumarsäure verstanden. $\alpha$,$\beta$-ethylenisch ungesättigte, Carboxylgruppen liefernde Comonomere sind beispielsweise Methylhydrogenmaleinat, Maleinsäureanhydrid, tert.-Butyl-acrylat etc., d.h. Comonomere, die während oder nach der Polymerisation durch Hydrolyse und/oder Pyrolyse in Carboxylgruppen enthaltende Comonomere umgesetzt werden. Die Ethylencopolymerisate können neben den $\alpha$,$\beta$-ethylenisch ungesättigten Carbonsäuren bzw. Carboxylgruppen liefernden Comonomeren noch andere mit Ethylen copolymerisierbare Comonomere einpolymerisiert enthalten (vgl. EP-A 1 106 999). Hierbei kommen insbesondere in Frage Ester der (Meth)acrylsäure, Mono- und Diester der Maleinsäure und Fumarsäure, Amide monoethylenisch ungesättigter Carbonsäuren, insbesondere (Meth)acrylsäureamid sowie N-mono- und N,N-Dialkylamide der (Meth)acrylsäure. Die Ethylencopolymerisate sind an sich bekannt und beispielsweise in den Literaturstellen GB-A- 2 019 745, US-A- 3 520 861, US-A- 3 264 272, GB-A- 1 011 981, US-A- 3 404 134 oder US-A- 3 969 434 beschrieben. Auch die entsprechenden Pfropfcopolymerisate sind als Ethylencopolymerisate geeignet.

Die Schmelzindices der Ethylencopolymerisate liegen im allgemeinen im Bereich von 0,1-500 g/10′ gemessen bei 190°C und 2,16 kp (nach DIN 53 735). Bevorzugt sind Produkte mit einem Schmelzindex von 2-80 g/10′. Die Schmelzpunkte der Ethylencopolymerisate liegen im Bereich von 70 bis 115°C.

Unter wasserlöslichen Metallsalzen werden Verbindungen verstanden, wie sie beispielsweise in der US-A- 3 264 272 definiert sind. Bevorzugt sind hierbei Verbindungen, die als Metallsalz ein Alkali-oder Erdalkalisalz oder ein Salz eines Nebengruppen-Metalls enthalten und einer organischen Säure entstammen, wobei Natriumacetat, Calciumacetat, Magnesiumacetat, Zinkformiat und Zinkacetat besonders bevorzugt sind. Bevorzugt werden als Metallhydroxide Alkali- oder Erdalkalihydroxide eingesetzt.

Im allgemeinen werden mindestens 10 Gew.% der Säuregruppierungen im Ethylencopolymerisat neutralisiert. Die Bestimmung des Neutralisationsgrades kann hierbei durch IR-Analysen, durch Titration bzw. durch Metallanalyse erfolgen.

Erfindungsgemäß wird in den Einzug eines Zweiwellenextruders, z.B. ZSK 57 der Firma Werner & Pfleiderer, das Ethylencopolymerisat eindosiert und über eine Aufschmelzzone bei 140-200°C, bevorzugt bei 140-160°C, aufgeschmolzen und mit dem festen Metallsalz in einer Mischzone mittels Knetelemente fein dispergiert. Ort der Metallsalzzugabe kann der Polymereinzugstrichter oder auch ein zweiter Feststoffeinzugstrichter sein.

In die Polymerschmelze in der Schmelzzone, bevorzugt in eine teilgefüllte Zone des Extruders, wird nun gerade soviel Wasser eingepumpt wie zum Erhalt eines homogenen Ionomers erforderlich ist. Die Wassermenge entspricht dabei vorzugsweise der Menge, die für eine 10 bis 20%ige Lösung des Metallsalzes erforderlich ist. Besonders günstig empfiehlt sich eine Arbeitsweise mit etwas konzentrierteren Lösungen, da der Wasserentfernungsschritt dadurch vereinfacht wird.

Vorteilhaft bei dieser Verfahrensweise ist, daß ein zusätzlicher Verfahrensschritt, das Auflösen des Metallsalzes in Wasser, wie es nach EP-A- 0 193 110 erforderlich ist, entfällt. Auch müssen in der Regel gemäß EP-A-0 193 110 aufgrund der Löslichkeitsgrenze der Metallsalze zur Erzielung technisch relevanter Neutralisationsgrade von mehr als 10 Mol% relativ große Wassermengen aus dem fertigen Ionomeren wieder durch Verdampfen entfernt werden, was energetisch ungünstig ist. Ein solcher Nachteil tritt bei dem hier beschriebenen Verfahren nicht auf. Überraschenderweise konnte auch keinerlei Korrosion festgestellt werden, wenn die Extruderschnecke aus gewöhnlichem CPR-Stahl bestand. Starke Korrosion trat jedoch auf, wenn zur Neutralisation eine wäßrige Metallsalzlösung gemäß EP-A- 0 193 110 eingesetzt wird.

Beispiel 1

Einem nur an der Flüssigkeitseinspeisestelle mit korrosionsgeschützten Schneckenelementen ausgestatteten Zweiwellenschnecken-Kneter der Fa. Werner & Pfleiderer, Typ ZSK 57, wurden pro Stunde 50 kg eines Ethylen-Acrylsäure-Copolymeren (EAA-Copolymer; Acrylsäuregehalt: 8,1 Gew.%) zugeführt. Über eine gegen Luftfeuchtigkeit abgeschirmte, mit Stickstoff geflutete Feststoffdosierung wurde dem Polymeren am Einzug pro Stunde 1,05 kg Natriumhydroxid als Schuppen zudosiert. Diese Mischung wurde bei 140°C aufgeschmolzen und homogenisiert. Am Ende der Aufschmelzzone des Extruders wurde in die Schmelze pro Stunde 6 kg destilliertes Wasser eingespeist und die Mischung in der anschließenden Zone bei 220°C zur Reaktion gebracht. Das Wasser wurde über eine gestufte, dreifache Entgasung nach Beendigung der Reaktion aus der Mischung entfernt und das Produkt als Strang aus dem Extruder ausgetragen und granuliert.

Die vollständige Abreaktion wird aus dem starken Abfall des Schmelzindex (Ausgangs-Copolymer: 13,8 g/10 min; Reaktionsprodukt z.B.: 0,6 g/10 min.) deutlich. Der Natrium-Gehalt wurde zu 1,1 Gew.% bestimmt, was einen Neutralisationsgrad von 44 Mol% bedeutet.

Das Produkt wies eine gute Folienqualität auf und war stippenfrei. Das Ausbleiben von Korrosion während der Herstellung im Extruder wird durch ein vollständig farbloses Produkt und den geringen Eisengehalt (weniger als 10 ppm) eindeutig belegt.

Vergleichsbeispiel 1

In der in Beispiel 1 beschriebenen Weise wurden auf der ZSK 57 pro Stunde 50 kg eines EAA-Copolymeren (Acrylsäuregehalt 8,1 Gew.%) mit 5,3 kg 20 gew.%iger Natronlauge umgesetzt. Das Wasser wurde, wie oben, über die dreistufige Entgasung entfernt. Das ausgetragene und granulierte Produkt zeigte eine tiefe Braunfärbung, und der hohe Eisengehalt (1.150 ppm) ließ auf starke Korrosion im Extruder während der Reaktionsführung schließen.

Vergleichsbeispiel 2

In der in Beispiel 1 beschriebenen Weise wurden auf der ZSK 57 50 kg des EAA-Copolymeren (Acrylsäuregehalt 8,1 Gew.%) mit 3 kg festem Natriumacetat umgesetzt. Das Produkt enthielt 0,9 Gew.% Natrium, zeigte aber aufgrund eines nicht sehr ausgeprägten Abfalles des Schmelzindex (auf 9,1g/10 min) eine nur sehr unvollständige Vernetzung. Darüber hinaus waren alle Folien von nur geringer Reißfestigkeit und sehr stark verstippt.

**Patentansprüche**

1. Verfahren zur Herstellung von ionisch vernetzten Ethylencopolymerisaten durch Mischen von Ethylencopolymerisaten, die 0,1 bis 20 Mol% $\alpha,\beta$-ethylenisch ungesättigte Carbonsäuren oder $\alpha,\beta$-ethylenisch ungesättigte Carboxylgruppen liefernde Comonomere einpolymerisiert enthalten, mit einem wasserlöslichen Metallsalz oder Metallhydroxid bei Temperaturen oberhalb des Schmelzpunktes des Ethylencopolymerisats in einem Zweiwellenextruder, dadurch gekennzeichnet, daß das Ethylencopolymerisat in der Mischzone des Extruders mit der festen Metallverbindung vermischt und anschließend in der Schmelzzone des Extruders durch Einpumpen von Wasser zum Ionomeren umgesetzt wird.

2. Verfahren nach Anspruch 1, dadurch gekennzeichnet, daß in der Mischzone eine Temperatur von 140 bis 200°C herrscht.


## Claims

1. A process for the preparation of an ionically crosslinked ethylene copolymer by mixing an ethylene copolymer which contains, as copolymerized units, from 0.1 to 20 mol % of $\alpha,\beta$-ethylenically unsaturated carboxylic acids or $\alpha,\beta$-ethylenically unsaturated comonomers donating carboxyl groups with a water-soluble metal salt or metal hydroxide at above the melting point of the ethylene copolymer in a twin-screw extruder, wherein the ethylene copolymer is mixed with the solid metal compound in the mixing zone of the extruder and is then converted into the ionomer in the melting zone of the extruder by pumping in water.

2. A process as claimed in claim 1, wherein the temperature in the mixing zone is from 140 to 200°C.


## Revendications

1. Procédé de préparation de copolymères d'éthylène réticulés ioniquement, par mélange de copolymères d'éthylène, qui contiennent en liaison polymère de 0,1 à 20% en moles d'acides carboxyliques $\alpha,\beta$-insaturés éthyléniquement ou de comonomeres fournissant des groupements carboxyle $\alpha,\beta$-insaturés éthyléniquement, avec un sel métallique ou un hydroxyde de métal hydrosoluble, à des températures supérieures au point de fusion du copolymère d'éthylène, dans une extrudeuse à deux arbres, caractérisé en ce que le copolymère d'éthylène est mélangé au composé métallique solide dans la zone de mélange de l'extrudeuse, puis est transformé en l'ionomère, dans la zone de fusion de l'extrudeuse, par injection d'eau à la pompe.

2. Procédé selon la revendication 1, caractérisé en ce qu'une température de 140 à 200°C règne dans la zone de mélange.